# EUROPEAN PATENT APPLICATION

(11) **EP 2 845 632 A1**
(43) Date of publication of application: **11.03.2015**
(21) Application number: 14181749.4
(22) Date of filing: 21.08.2014
(51) Int. Cl.: A63C 5/048, A63C 5/12

(54) **Ski, snowboard and associated method of fabricating**

(30) Priority: 21.08.2013 CN 201310367052
(71) Applicant: Ronghell Technology (shenzhen) Co., Ltd., Guangdong 518107 (CN)
(72) Inventor: Lee, Clifford, Forest Hills,, NY New York 11375 (US)
(74) Representative: Hoefer & Partner

(57) **Abstract**

A method of fabricating a snowboard or ski is provided. In one embodiment, a trench (220) is routed at the face of a core (210). A thermosetting polymeric solution (430) is poured into the trench. The thermosetting polymeric solution is cured to form a thermosetting polymeric mold. A region (350) between the outer perimeter of the core and the outer perimeter of the trench is removed without stripping the thermosetting polymeric mold so as to form a sidewall (560) integrally surrounding the core.

## Description

### CROSS-REFERENCE TO RELATED APPLICATIONS

This application claims the benefit of Chinese application Serial No. 201310367052.8, filed on August 21, 2013.

### TECHNICAL FIELD

The technology described in this disclosure relates generally to a fabrication method for snowboard and ski, and more particularly to a method of fabricating snowboard and the snowboard itself.

### BACKGROUND

Snowboards are generally constructed of a hardwood core which is sandwiched between multiple layers of fiberglass. Snowboard edge is a strip of metal, tuned normally to just less than 90 degrees, that runs the length of either side of the board. The sidewall is the area along the edge of a snowboard and is configured to fasten the edge in order to strengthen the shattering/colliding resistance of the snowboard. The basic construction of a ski is similar to a snowboard in that a ski has a laminated wood core at its centre surrounded by composite layers above and below and sidewalls to the sides.

There are generally three types of sidewall construction: cap construction, Acrylonitrile Butadiene Styrene (ABS) sidewall/sandwich construction and half-cap construction. In a cap construction, the top layer of glass laminate is formed over the top of the wooden core and pinched at the edge to seal in the core. The advantage of the cap construction is that the technique is cheaper than ABS sidewall construction and it allows the designers to customize the edge damping. The downside is that cap construction is less durable than ABS sidewall construction and when the edge is damaged, it is extremely difficult to repair the cap. Today, cap is only really found on budget snowboards.

ABS is a dense heavy material that is used to make snowboard and skis stiffer torsionally, have better edge grip, and more durable from impact as compared to cap. ABS sidewall also provides more stability at high speeds and more pop/acceleration out of the turns. However, there are also downsides with ABS sidewall constructed snowboards and skis. For examples:

ABS sidewall can be more susceptible to damage from edges digging into the sidewalls and ski crossing;

ABS sidewall construction is complicated because of the separate sidewall members bordering the core; and

Large cracks are likely to occur between the core and the ABS sidewall, or between the topsheet/fiber glass and ABS sidewall because the ABS sidewall is adhered to the core and the different sheets on/below the core with an adhesive or resin.

Half-cap construction is the hybrid of the aforementioned two constructions where the fiberglass or composite layer comes down around the wooden core, and the topsheet comes part way around to join a smaller sidewall. This design provides good pressure transmission to the edges, and is reasonably light and snappy. In a half-cap construction, a snowboard or ski generally has an ABS sidewall along the middle of the board or ski, turning into a cap construction at the tips. Although first invented to address the problems of cap and ABS sidewall constructions, there are also downsides to the half-cap construction. For example, half-cap construction is time-consuming and more difficult than either cap or ABS sidewall construction. The more complicated process translates into higher production costs.

The present technology is invented to address the problems presented by the aforementioned sidewall construction processes for snowboards and skis.

### SUMMARY

A method of fabricating snowboard and ski is provided. In one embodiment, a trench is routed at the face of a core. A thermosetting polymeric solution is poured into the trench. The thermosetting polymeric solution in the trench is cured to form a hardened, thermosetting polymeric mold. A region between the outer perimeter of the core and the outer perimeter of the trench is removed without stripping the thermosetting polymeric mold so as to form a sidewall integrally surrounding the core.

A snowboard or ski is also provided. The snowboard or ski includes a core with an integrally formed sidewall surrounding the core. The sidewall is made of thermosetting polymeric mold.

### BRIEF DESCRIPTION OF THE DRAWINGS

The accompanying drawings illustrate one or more embodiments of the present disclosure and together with the written description, serve to explain the principles of the disclosure. Wherever possible, the same reference numbers are used throughout the drawings to refer to the same or like elements of an embodiment, and wherein:
FIG. 1 illustrates a flowchart of a method of fabricating a snowboard or ski in accordance with some embodiments of the present disclosure.
FIG. 2 illustrates a perspective view of a core in accordance with some embodiments of the present disclosure.
FIG. 3 illustrates a top view of a core after a trench is routed in accordance with some embodiments of the present disclosure.
FIG. 4 illustrates a top view of a core after a thermosetting polymeric solution is poured into the trench in accordance with some embodiments of the present disclosure.
FIG. 5 illustrates a top view of a basic structure of a snowboard having a thermosetting polymeric mold as the sidewall after the region between the outer perimeter of the core and the outer perimeter of the thermosetting polymeric mold is removed in accordance with some embodiments of the present disclosure.

### DETAILED DESCRIPTION

The present disclosure will now be described more fully hereinafter with reference to the accompanying drawings, in which exemplary embodiments of the disclosure are shown. This disclosure may, however, be embodied in many different forms and should not be construed as limited to the embodiments set forth herein. Rather, these embodiments are provided so that this disclosure will be thorough and complete, and will fully convey the scope of the disclosure to those skilled in the art. Like reference numerals refer to like elements throughout.

The terminology used herein is for the purpose of describing particular embodiments only and is not intended to limit the disclosure. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, parts and/or sections, these elements, components, regions, parts and/or sections should not be limited by these terms. These terms are only used to distinguish one element, component, region, part or section from another element, component, region, layer or section. Thus, a first element, component, region, part or section discussed below could be termed a second element, component, region, layer or section without departing from the teachings of the present disclosure.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In order to address the shortcomings of a board/ski constructed with ABS sidewall, this disclosure teaches a method of making a stronger board/ski with integrally formed sidewall made of thermosetting polymeric mold.

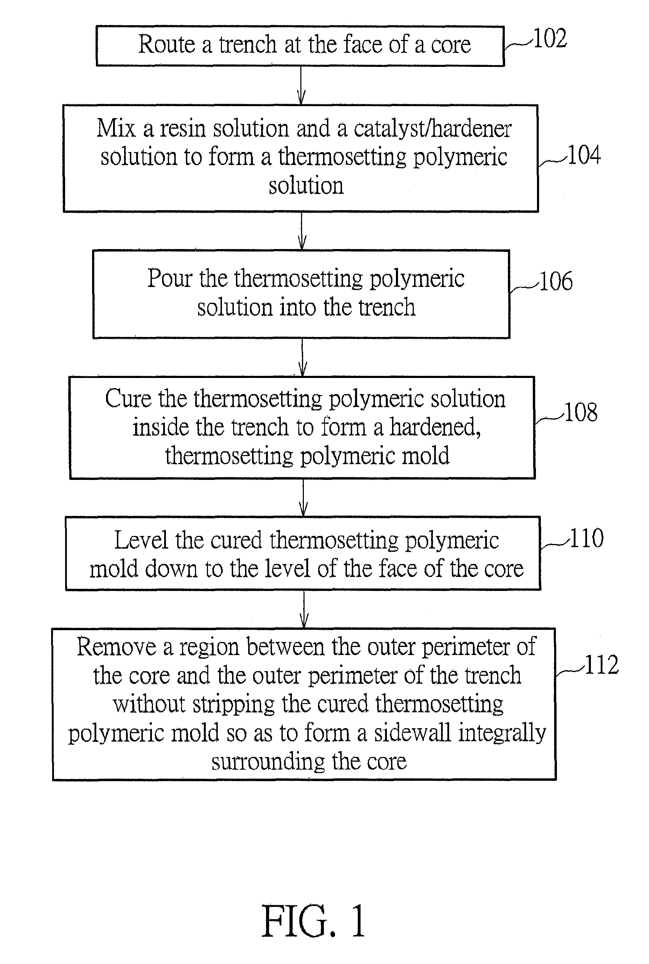

FIG. 1 is a flowchart of a method of fabricating a snowboard or ski according to an embodiment. Steps of the method include:

Stage 102: Route a trench at the face of a core.

Stage 104: Mix a resin solution and a catalyst/hardener solution to form a thermosetting polymeric solution.

Stage 106: Pour the thermosetting polymeric solution into the trench.

Stage 108: Cure the thermosetting polymeric solution inside the trench to form a hardened, thermosetting polymeric mold.

Stage 110: Level the cured thermosetting polymeric mold down to the level of the face of the core.

Stage 112: Remove a region between the outer perimeter of the core and the outer perimeter of the trench without stripping the cured thermosetting polymeric mold so as to form a sidewall integrally surrounding the core.

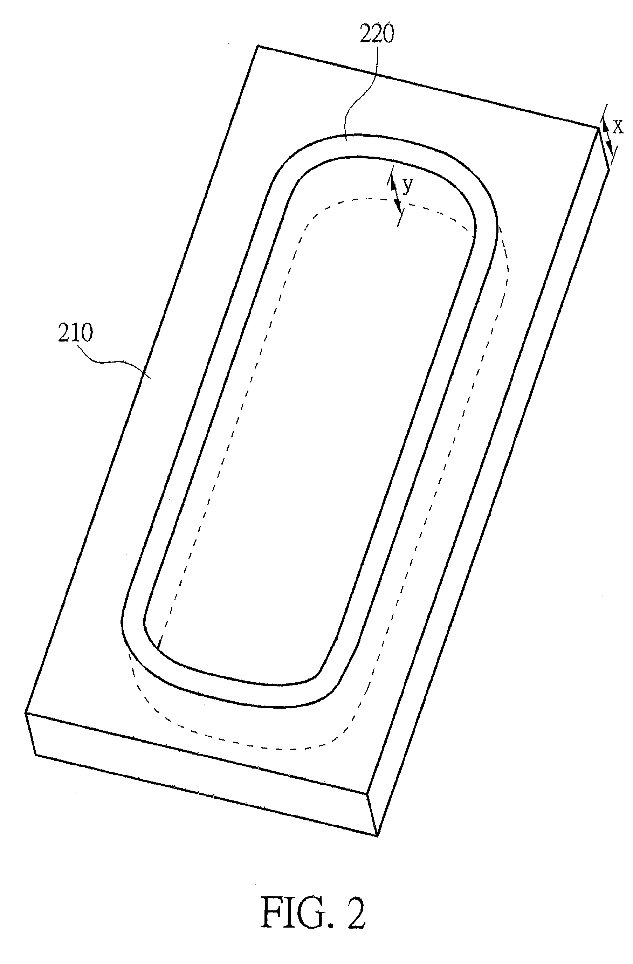

The steps shown in FIG. 1 will be explained in detail with the aid of FIGS. 2 - 5.

FIG. 2 illustrates a perspective view of a core 210. According to Stage 102, a trench 220 is routed at the face of the core 210. The trench may be in the shape and dimension of a snowboard or ski. In one example, the height x of the core 210 is more than the depth y of the trench 220. In certain embodiment, when the height x of the core 210 is approximately 10mm, the depth y of the trench 220 may be approximately 9mm so that the core 210 would not be punctured by the trench 220. In other words, if x is the height of the core and y is the depth of the trench, the preferred embodiment should be: x > y.

The core 210 may be made of strips of laminated hardwood like beech, birch, aspen, bamboo or a mixture of them. Wood is used as it provides better response with good vibration damping, and has less resonance than foam or plastic. In another embodiment, the core 210 may also be made of carbon, Kevlar, aluminum honeycomb or foam.

In one embodiment, a Computer Numerical Control (CNC) machine may be utilized to support the core 210 and route out the trench 220 at the face of the core 210.

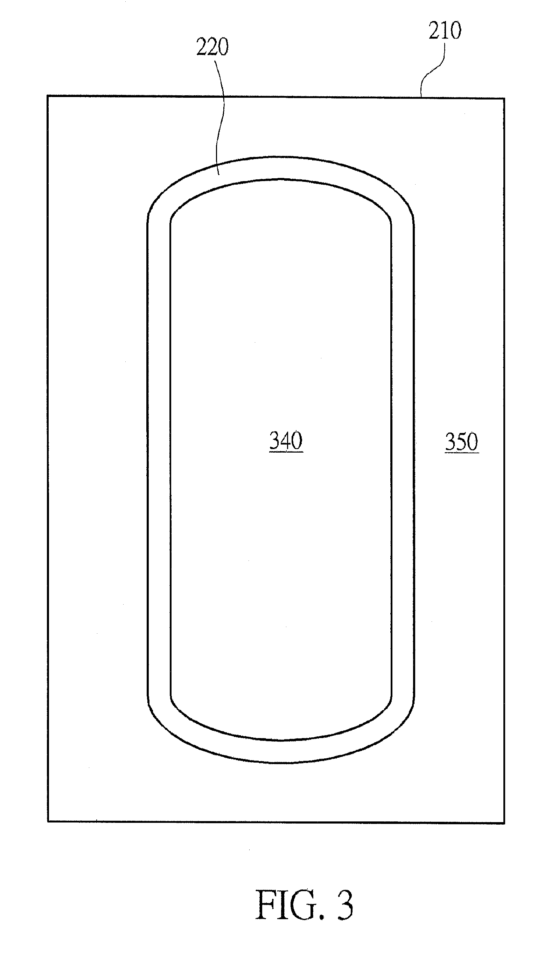

FIG. 3 illustrates a top view of the core 210 after the trench 220 is routed in Stage 102. As shown in FIG. 3, an internal region 340 of the core 210 is enclosed by the trench 220, and an external region 350 of the core 210 is located between the outer perimeter of the core 210 and the outer perimeter of the trench 220.

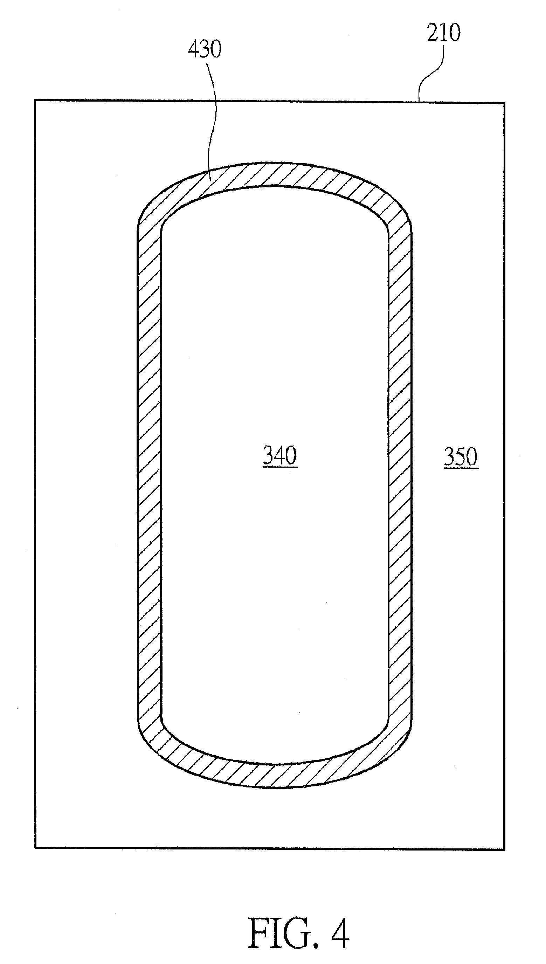

According to Stage 104, a thermosetting polymeric solution 430 (with reference to FIG. 4) is prepared by mixing a resin solution with a catalyst/hardener solution. The catalyst of the catalyst/hardener solution may include an anionic catalyst or a cationic catalyst. The anionic catalyst may be a Lewis base, such as tertiary amines or imidazoles. The cationic catalyst may be a Lewis acid, such as a boron trifluoride complex. The hardener of the catalyst/hardener solution may include polyfunctional amines, acids (and acid anhydrides), phenols, alcohols, and thiols. In one embodiment, the thermosetting polymeric solution 430 is a urethane solution. In other embodiments, the thermosetting polymeric solution 430 may also be an acrylic solution or a cyanoacrylate solution.

In certain embodiment, the thermosetting polymeric solution 430 has a hardness of approximately between 70A and 100A durometers, which is measured based on the type-A durometer under the American Society for Testing and Materials (ASTM) D2240 standard. In another embodiment, the thermosetting polymeric 430 has a hardness of approximately 90A durometers.

If the thermosetting polymeric solution 430 is to be colored with pigment, the pigment is first mixed with the catalyst/hardener solution. Subsequently, the catalyst/hardener solution with the color pigment is then mixed with the resin solution. Pigments can comprise all shades of color, including fluorescent or phosphorescent colors.

In one embodiment, a container may be utilized to mix the resin solution with the catalyst/hardener solution. After mixing, the container may be cleaned for re-use. In another embodiment, a new container may be used each time to mix the resin solution with the catalyst/hardener solution to avoid contamination.

In one embodiment, either the resin solution or the catalyst/hardener solution or both may be heated before mixing to facilitate pouring. Specifically, a warm thermosetting polymeric solution 430 is less viscous and can be more smoothly and evenly poured into trench 220. Also, curing time for a warm thermosetting polymeric solution 430 should be faster.

In another embodiment, the mixing is completed by adding the catalyst/hardener solution into the resin solution.

In one embodiment, depending on the size of the snowboard to be fabricated, between approximately 700 grams and 900 grams of the thermosetting polymeric solution 430 may be used per board to make the sidewall.

FIG. 4 illustrates a top view of the core 210 after the thermosetting polymeric solution 430 is poured into the trench 220 according to Stage 106. The trench 220 is substantially filled by the thermosetting polymeric solution 430. In one embodiment, the thermosetting polymeric solution 430 may be poured into the trench 220 at a low speed until the trench 220 is substantially filled. In another embodiment, a predetermined amount of the thermosetting polymeric solution 430 is provided to overflow the trench 220 to ensure that the trench 220 is completely covered with the thermosetting polymeric solution 430.

In another embodiment, the thermosetting polymeric solution 430 may be poured into the trench 220 manually or by a machine. In yet another embodiment, the thermosetting polymeric solution may be more precisely injected into the trench 220 by using a syringe or other injecting tools.

The thermosetting polymeric solution 430 may be directly purchased or be prepared in other ways in which those skilled in the art are familiar with such that Stage 104 is optional.

The core 210 may be bent or twisted before, during or after Stage 106. Specifically, the face of the core 210 may become uneven, i.e., cupped, due to environmental or man-made reasons. Consequently, the core 210 may be further leveled or flattened in order to prevent the accumulation of excess thermosetting polymeric solution 430 at the low positions of the trench 220.

In one embodiment, after routing out the trench 220 but before pouring the thermosetting polymeric solution 430, the trench 220 is cleaned. For example, a solvent can be used to clean and remove debris such as sawdust within the trench 220. The removing of debris would help the bonding of the thermosetting polymeric solution 430 to the surface of the trench 220 during the curing process.

Under some circumstances, air bubbles may occur in the thermosetting polymeric solution 430 after the thermosetting polymeric solution 430 is poured into the trench 220. Therefore, heat treatment may be provided around the perimeter of the trench 220 to help eliminate air bubbles. For example, a propane torch may be used to run a flame around the perimeter of the trench 220 in order to drive the air bubbles out of the thermosetting polymeric solution 430.

In one embodiment, a plurality of cores 210 having respective trench 220 may be lined up so that the thermosetting polymeric solution 430 can be poured sequentially in batch to reduce manufacturing time.

According to Stage 108, during the curing of the thermosetting polymeric solution 430, it first undergoes gelation before hardening into a thermosetting polymeric mold 560. The gelation of the thermosetting polymeric solution 430 typically implies that the thermosetting polymeric solution 430 gradually loses mobility as a fluid.

In one embodiment, the core 210 may be disposed inside a heating room to accelerate the curing process.

Note that the surface of the cured thermosetting polymeric mold 560 may not be leveled with the surface of the internal region 340 or the external region 350 after Stage 108. Specifically, after curing, there may be bumps or swelling formed on the surface of the thermosetting polymeric mold 560. According to Stage 110, therefore, the surface of the cured thermosetting polymeric mold 560 may be leveled down until it aligns with the surface of the core 210. Note that Stage 110 may be skipped if surface of the cured thermosetting polymeric mold is already at the same level as the surface of regions 340 or 350.

In one embodiment, Stage 110 may be performed by placing the core 210 on a CNC machine so that the entire top surface of the core 210 along with the cured thermosetting polymeric mold 560 may be leveled using a surface planing bit or by using a belt sander.

In another embodiment, after Stage 110 is performed, the thermosetting polymeric mold 560 may be abraded such that there are no smooth or glossy portions at the surface of thermosetting polymeric mold 560. In other words, the surface of the post-abrasion thermosetting polymeric mold 560 becomes coarse. Therefore, in the subsequent manufacturing procedures, processing agents applied to such post-abrasion surface maybe be better retained. For example, more bonding agent will be caught/preserved by the coarse post-abrasion surface such that stronger and more even adhesion between the thermosetting polymeric mold 560 and other snowboard/ski components may be created, The resulting superior bonding helps to improve the durability of the snowboard/ski fabricated.

In one embodiment, after Stage 110 is performed, the core 210 may be turned over such that the bottom surface of the core 210 may be patterned. Note that both the top and bottom surfaces of the core 210 may be abraded using a 80 grit sandpaper before patterning.

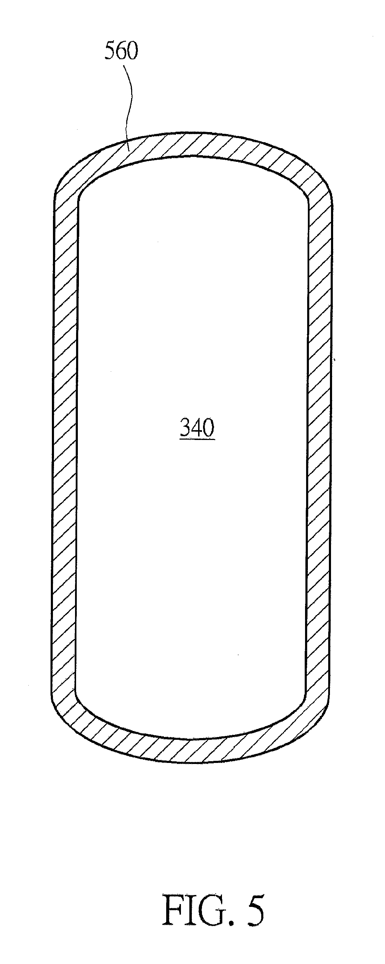

According to Stage 112, with reference to FIG. 5, for lay-up process of the snowboard, the external region 350 may be removed while the cured thermosetting polymeric mold 560 is kept. In one embodiment, the foregoing operation may be performed during the lamination process of the core 210. In another embodiment, the external region 350 may be removed using a jigsaw or fine-toothed bandsaw. Accordingly, a thermosetting polymeric mold 560 sidewall integrally formed with the core 210 is formed at or near the original location of the perimeter of the trench 220.

In one embodiment, the cured thermosetting polymeric sidewall may be further polished by wet-sanding using a grinder with a 180 grit belt, by drying the sidewall, and/or by wiping the sidewall with a cloth and solvent (such as a lacquer thinner).

After performing Stage 112, the basic structure of a snowboard/ski with an integrally formed sidewall is completed. Thereafter, the sidewall may be ready for further screen printing, i.e., patterning, if needed.

Note that the conventional lay-up process for fabricating a snowboard/ski may also be utilized after Stage 112. However, rubber foil is not required since the integrally formed thermosetting polymeric sidewall already provides dampening functions.

Since the thermosetting polymeric mold 560 sidewall is one that integrally formed with the core 210, the abovementioned problems with the ABS sidewall may be resolved.

In another embodiment, a plurality of lightings may be embedded within the thermosetting polymeric mold 560. In yet another embodiment, the lightings may be provided by positioning active or passive lighting units inside the trench 220 before Stage 106.

In certain embodiment, all the abovementioned stages and/or related limitations may be performed using specifically-programmed machines, such as machine arms programmed based on the abovementioned stages and/or limitations.

It is also noted that embodiments formed from reasonable combinations/permutations and/or by adding any of the abovementioned limitations are also contemplated.

Those skilled in the art will readily observe that numerous modifications and alterations of the device and method may be made while retaining the teachings of the disclosure.

Previous descriptions are only embodiments of the present disclosure and are not intended to limit the scope of the present disclosure. Many variations and modifications according to the claims and specification of the disclosure are still within the scope of the claimed disclosure. In addition, each of the embodiments and claims does not have to achieve all the advantages or characteristics disclosed. Moreover, the abstract and the title only serve to facilitate searching patent documents and are not intended in any way to limit the scope of the claimed disclosure.

## Claims

1. A method of fabricating snowboard and ski, comprising:
routing a trench at a face of a core;
pouring a thermosetting polymeric solution into the trench;
curing the thermosetting polymeric solution in the trench to form a thermosetting polymeric mold; and
removing a region between an outer perimeter of the core and an outer perimeter of the trench without stripping the thermosetting polymeric mold so as to form a sidewall integrally surrounding the core.

2. The method of claim 1, further comprising:
mixing a resin solution and a catalyst/hardener solution to form the thermosetting polymeric solution.

3. The method of claim 1, further comprising:
leveling the thermosetting polymeric mold down to a level of a surface of the core.

4. The method of claim 3, wherein the step of leveling comprises:
leveling the thermosetting polymeric mold by using a planing bit or a belt sander.

5. The method of claim 1, wherein the core comprises beech, birch, aspen, bamboo or a combination thereof.

6. The method of claim 1, wherein the thermosetting polymeric solution is an urethane solution.

7. The method of claim 1, wherein the step of pouring comprises:
pouring the thermosetting polymeric solution having a hardness of approximately between 70A and 100A durometers.

8. The method of claim 1, wherein the step of routing comprises:
routing the trench by means of a computer numerical control (CNC) machine.

9. The method of claim 1, wherein the trench is in a shape and dimension of a snowboard or ski.

10. The method of claim 1, further comprising:
cleaning the trench before pouring the thermosetting polymeric solution into the trench.

11. The method of claim 1, further comprising:
heating the thermosetting polymeric solution before pouring the thermosetting polymeric solution into the trench.

12. The method of claim 1, further comprising:
leveling the core before pouring the thermosetting polymeric solution into the trench.

13. The method of claim 1, further comprising:
providing heat treatment proximal to the trench after pouring the thermosetting polymeric solution into the trench.

14. The method of claim 1, further comprising:
wet-sanding the sidewall on a grinder;
drying the sidewall; and
treating the sidewall with a solvent.

15. A ski comprising:
a core; and
a sidewall integrally formed with the core, wherein the sidewall is made of cured thermosetting polymeric mold.

16. A snowboard, comprising:
a core; and
a sidewall integrally formed with the core, wherein the sidewall is made of cured thermosetting polymeric mold.

17. The snowboard of claim 16, wherein the sidewall made of cured thermosetting polymeric mold has a hardness of approximately between 70A and 100A durometers.

18. The snowboard of claim 16, wherein the cured thermosetting polymeric mold is an urethane mold.

19. The snowboard of claim 16, wherein the cured thermosetting polymeric mold is formed by curing a solution that is a mixture of a resin solution and a catalyst/hardener solution.

20. The snowboard of claim 16, further comprising:
a plurality of lighting embedded within the thermosetting polymeric mold.
